Europäisches Patentamt

European Patent Office

Office européen des brevets

(11) Veröffentlichungsnummer : **0 087 052**
**B1**

(12)                    EUROPÄISCHE PATENTSCHRIFT

(45) Veröffentlichungstag der Patentschrift :
28.05.86

(21) Anmeldenummer : 83101153.1

(22) Anmeldetag : 07.02.83

(51) Int. Cl.⁴ : **H 02 K 11/00**

(54) Anordnung für die kontakt- und berührungslose Übertragung von Mess- und Steuersignalen.

(30) Priorität : 22.02.82 DE 3206338

(43) Veröffentlichungstag der Anmeldung :
31.08.83 Patentblatt 83/35

(45) Bekanntmachung des Hinweises auf die Patenterteilung : 28.05.86 Patentblatt 86/22

(84) Benannte Vertragsstaaten :
CH LI NL

(56) Entgegenhaltungen :
DE-B- 2 359 578
DE-B- 2 366 003
GB-A- 2 058 474

(73) Patentinhaber : KRAFTWERK UNION AKTIENGE-
SELLSCHAFT
Wiesenstrasse 35
D-4330 Mülheim (Ruhr) (DE)

(72) Erfinder : Küter, Heinrich

verstorben (DE)
Erfinder : Klaar, Jürgen
Haydnstrasse 13
D-4133 Neukirchen-Vluyn (DE)

(74) Vertreter : Mehl, Ernst, Dipl.-Ing. et al
Postfach 22 01 76
D-8000 München 22 (DE)

## Beschreibung

Die Erfindung bezieht sich auf eine Anordnung für die kontakt- und berührungslose Übertragung von Meß- und Steuersignalen bei Generatoren mit einer rotierenden Gleichrichter- oder Thyristorerregung gemäß dem Oberbegriff des Patentanspruchs 1.

Eine derartige Anordnung ist aus der DE-A-23 59 578 bekannt. Bei dieser bekannten Anordnung ist für das positive Potential des Erregerstromes ein Plusrad und für das negative Potential des Erregerstromes ein Minusrad vorgesehen, wobei jedes dieser Stromrichterräder eine gegen die Welle isolierte Nabe und einen Flanschring besitzt, an dessen Innenumfang die Leistungs-Bauteile befestigt sind. Am Außenumfang der Flanschringe des Plusrades und des Minusrades sind die rotierenden Teile einer ersten bzw. zweiten induktiven Übertragungseinrichtung befestigt, deren feststehende Teile im Maschinengehäuse gehalten sind. Die Flanschringe wirken jedoch gleichzeitig als Gleichstrom-Sammelleitungen, welche über die isoliert auf die Welle aufgesetzten Naben und radiale Stromzuführungsbolzen mit den zugehörigen, axial in der Welle verlaufenden Gleichstromleitungen verbunden sind. Die Übertragung der hochfrequenten Steuersignale kann also bei der bekannten Anordnung dadurch beeinträchtigt werden, daß durch die Flanschringe und die Naben hohe Leistungsströme mit Spannungsspitzen geleitet werden. Durch die axiale Nebeneinanderanordnung von Plusrad und Minusrad bzw. erster und zweiter induktiver Signalübertragungseinrichtung ergibt sich außerdem eine verhältnismäßig große axiale Erstreckung der bekannten Anordnung, was im Hinblick auf die biegekritischen oder torsionskritischen Drehzahlen zu Schwierigkeiten führen kann.

Der Erfindung liegt daher die Aufgabe zugrunde, die Anordnung der eingangs genannten Art so zu verbessern, daß bei einer möglichst kompakten Unterbringung der beiden induktiven Signalübertragungseinrichtungen eine ungestörte Signalübertragung gewährleistet ist.

Diese Aufgabe wird erfindungsgemäß durch die im kennzeichnenden Teil des Patentanspruchs 1 aufgeführten Merkmale gelöst.

Bei der erfindungsgemäßen Anordnung ergibt sich durch die Ineinanderschachtelung der beiden induktiven Signalübertragungseinrichtungen eine besonders gedrängte und raumsparende Bauweise, wobei eine gegenseitige Beeinflussung der beiden induktiven Signalübertragungseinrichtungen und eine Störung der Signalübertragung aufgrund anderer äußerer Einflüsse durch die Abschirmwirkung des auf Erdpotential liegenden Flanschringes verhindert wird.

Weitere vorteilhafte Ausgestaltungen der erfindungsgemäßen Anordnung sind in den Ansprüchen 2 bis 10 angegeben.

Im folgenden werden Ausführungsbeispiele der Erfindung anhand der Zeichnung näher erläutert.

Dabei zeigt :

Figur 1 eine Anordnung für die kontakt- und berührungslose Signalübertragung bei einer rotierenden Thyristorerregung im Längsschnitt,

Figur 2 eine Anordnung für die kontakt- und berührungslose Signalübertragung bei einer rotierenden Gleichrichtererregung im Längsschnitt und

Figur 3 den Aufbau des feststehenden und rotierenden Teils einer induktiven Signalübertragungseinrichtung als vergrößert herausgezeichnete Einzelheit der Fig. 1.

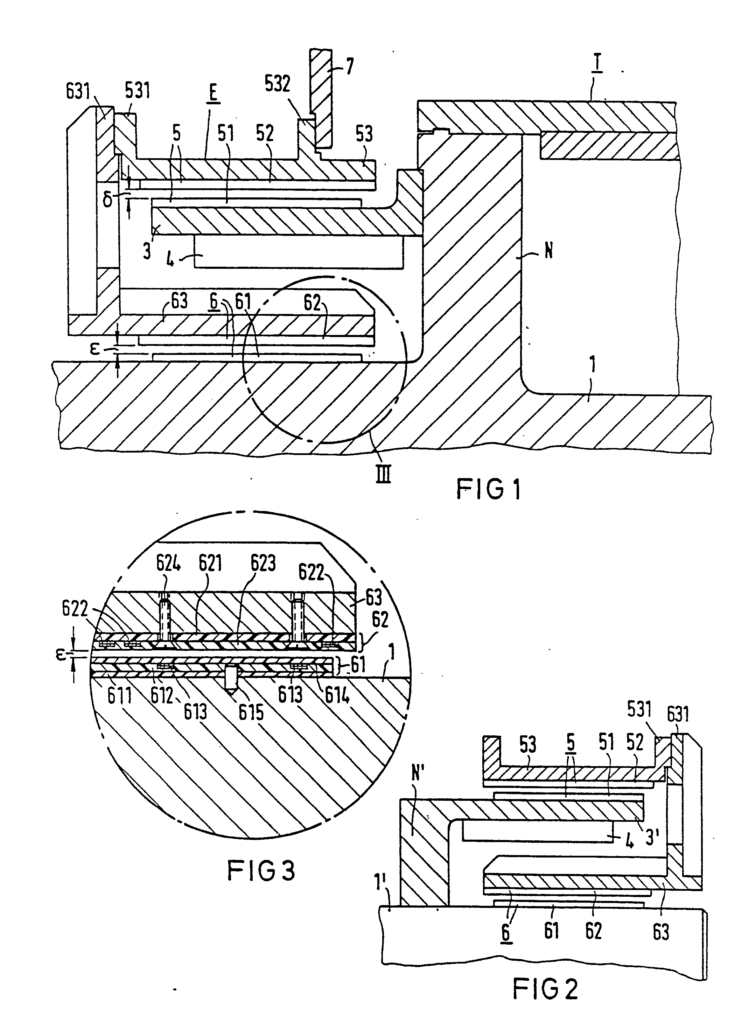

Fig. 1 zeigt in stark vereinfachter schematischer Darstellung eine Anordnung für die Übertragung von Meß- und Steuersignalen bei einer rotierenden Thyristorerregung. Die rotierende Thyristorerregung besteht im wesentlichen aus einem Thyristor-Rad T, welches sämtliche Leistungs-Bauteile trägt und aus einem Elektronik-Rad E, welches die Meß-, Steuer- und Versorgungselektronik trägt, wobei das Thyristor-Rad T und das Elektronik-Rad E eine gemeinsame, an die Welle 1 der Erregeranordnung angewachsene Nabe N besitzen. Die gemeinsame Nabe N liegt über die Welle 1 und eine in der Zeichnung nicht dargestellte Erdungsbürste auf Erdpotential, so daß die Meß-, Steuer- und Versorgungselektronik des Elektronik-Rades E von den Störeinflüssen der in der Zeichnung nicht dargestellten Leistungs-Bauteile des Thyristor-Rades T wirksam abgeschirmt ist.

Das Elektronik-Rad E wird im einzelnen durch einen Flanschring 3 gebildet, welcher seitlich an die Nabe N angeflanscht ist und somit ebenfalls auf Erdpotential liegt. Am Innenumfang des Flanschringes 3 sind gleichmäßig über den Umfang verteilt Baueinheiten 4 angeordnet, welche die Meß-, Steuer- und Versorgungselektronik der rotierenden Thyristorerregung enthalten. Der Innenumfang des Flanschringes 3 ist dabei im Querschnitt polygonal ausgebildet, so daß an jeder ebenen Fläche des Polygons jeweils eine der Baueinheiten 4 mit in der Zeichnung nicht näher dargestellten Befestigungsmitteln angebracht werden kann.

Neben den vorstehend erwähnten Baueinheiten 4 ist im Bereich des Elektronik-Rades E für die Übertragung der Meß- und Steuersignale auf die rotierende Welle 1 und von der Welle 1 auf die ruhenden Anlagenteile eine induktive Signalübertragung vorgesehen, die für die eine Übertragungsrichtung auf der Welle 1 und für die andere Übertragungsrichtung auf dem Elektronik-Rad E angeordnet ist. Dabei wird durch die Abschirmwirkung der Nabe N, des Thyristor-Rades T und des Elektronik-Rades E eine ungestörte Signalübertragung ermöglicht. Im einzelnen sind für die kontakt- und berührungslose Übertragung der Meß- und Steuersignale eine erste induktive Signalübertragungseinrichtung 5 und eine konzentrisch dazu innerhalb des Flanschringes 3 angeordnete zweite induktive Signalübertragungseinrichtung 6 vorgesehen. Der rotierende Teil 51 der ersten induktiven Signalübertragungseinrichtung 5 ist dabei am Außenumfang des Flanschringes 3 befestigt, während der rotierende Teil 61 der zweiten induktiven Signalübertragungseinrichtung 6 im Axialbereich des Flanschringes 3 auf der Welle 1 befestigt ist. Die feststehenden Teile 52 bzw. 62 der ersten induktiven Signalübertragungseinrichtung 5 bzw. der zweiten induktiven Signalübertragungseinrichtung 6 sind im Innenumfang eines ersten Tragzylinders 53 bzw. eines zweiten Tragzylinders 63 befestigt, wobei die beiden Tragzylinder 53 und 63 über außerhalb des Axialbereichs des Ringflansches 3 angeordnete Flanschen 531 bzw. 631 konzentrisch zueinander ausgerichtet und fest miteinander verbunden sind. Auf diese Weise können dann die beiden Tragzylinder 53 und 63 gemeinsam über einen weiteren Flansch 532 des ersten Tragzylinders 53 an einem Befestigungsring 7 des die Erregeranordnung umgebenden Maschinengehäuses befestigt werden. Durch die auf Erdpotential liegenden Tragzylinder 53 und 63 wird die elektrische Abschirmung der beiden induktiven Signalübertragungseinrichtungen 5 und 6 weiter verbessert. Außerdem kann durch die konzentrische Anordnung der beiden induktiven Signalübertragungseinrichtungen 5 und 6 und durch die Zusammenfassung der bisher üblichen Plus- und Minusräder zu einem einzigen Thyristor-Rad T die axiale Baulänge der gesamten Erregeranordnung erheblich reduziert werden. Vgl. hierzu die mit der EP-A-0 087 053 veröffentlichte Europäische Patentanmeldung gleicher Priorität wie die vorliegende. Jene Anmeldung hat die Anordnung der vorliegenden Anordnung in Kombination mit einer Erregeranordnung zum Inhalt.

Zur Montage der vorstehend beschriebenen induktiven Signalübertragungseinrichtungen 5 und 6 werden zunächst deren rotierende Teile 51 bzw. 61 auf den Flanschring 3 bzw. auf die Welle 1 aufgebracht und auf Rundlauf geprüft. Nach dieser Rundlaufkontrolle wird der erste Tragzylinder 53 mit dem an seinem Innenumfang befestigten feststehenden Teil 52 der ersten induktiven Signalübertragungseinrichtung 5 in seine Position geschoben und über seinen Flansch 532 an den Befestigungsring 7 des Maschinengehäuses derart befestigt, daß sich zwischen dem rotierenden Teil 51 und dem feststehenden Teil 52 der ersten induktiven Signalübertragungseinrichtung 5 ein in Umfangsrichtung gleichbleibender Luftspalt δ ergibt. Die Einstellung und Messung dieses Luftspaltes δ wird dabei nicht behindert, da der mehrteilige zweite Tragzylinder 63 erst danach über der Welle 1 zusammengebaut, in seine Position geschoben und über seinen Flansch 631 an dem Flansch 531 des ersten Tragzylinders 53 befestigt wird. Da der erste Tragzylinder 53 und der zweite Tragzylinder 63 durch nicht näher bezeichnete Vor- und Rücksprünge ihrer Flanschen 531 bzw. 631 bereits konzentrisch zueinander ausgerichtet sind, entfällt die Notwendigkeit einer gesonderten Einstellung des Luftspaltes ε zwischen dem rotierenden Teil 61 und dem feststehenden Teil 62 der zweiten induktiven Signalübertragungseinrichtung 6. Eine Kontrolle dieses Luftspaltes ε ist jedoch ohne weiteres möglich.

Fig. 2 zeigt eine Variante, bei welcher die induktiven Signalübertragungseinrichtungen 5 und 6 außerhalb des Lagers am Ende der Welle 1' einer Erregeranordnung mit rotierenden Gleichrichtern angeordnet sind. Der Flanschring 3', welcher an seinem Außenumfang den rotierenden Teil 51 der ersten induktiven Signalübertragungseinrichtung 5 und an seinem Innenumfang die Baueinheiten 4 trägt, ist bei dieser Ausführungsform mit der auf die Welle 1' aufgeschrumpften Nabe N' einstückig ausgebildet. Da sich der Flanschring 3' von der Nabe N' ausgehend in axialer Richtung zum Ende der Welle 1' hin erstreckt, wird eine besonders günstige Zugänglichkeit für die Montage der beiden induktiven Signalübertragungseinrichtungen 5 und 6 erzielt. Insbesondere entfällt auch die Notwendigkeit, die Tragzylinder 53 und 63 geteilt auszubilden, da sie nicht über der Welle 1 zusammengebaut werden müssen, sondern in axialer Richtung von außen her in ihre Position geschoben werden können, zunächst der erste Tragzylinder 53 und nach dessen Ausrichten und Befestigen der zweite Tragzylinder 63. Der erste Tragzylinder 53 kann dabei als einteiliges, schwingungsfestes Gehäuse ausgebildet werden, das auf der Grundplatte befestigt und fixiert wird und das durch Unterlegbleche oder geeignete Stellelemente in der Höhe ausgerichtet wird. Da bei einer Erregeranordnung mit rotierenden Gleichrichtern die beiden induktiven Signalübertragungseinrichtungen 5 und 6 nur zur Übertragung von Meß- und Kontrollsignalen dienen und eine Ansteuerung der rotierenden Gleichrichter entfällt, brauchen beide Signalübertragungseinrichtungen 5 und 6 nicht in axialer Nähe des Trägerrades der rotierenden Gleichrichter angeordnet zu werden.

Fig. 3 zeigt in einem vergrößerten Ausschnitt aus der Fig. 1 den Aufbau und die Festlegung des rotierenden Teils 61 und des feststehenden Teils 62 der zweiten induktiven Signalübertragungseinrichtung 6. Der rotierende Teil 61 besteht in radialer Richtung von innen nach außen gesehen aus einer auf die Welle 1 aufgebrachten Innenlage 611, einem in axialer Richtung und in Umfangsrichtung unterteilten Spulenträger 612, dessen Außenumfang Nuten zur Aufnahme von Spulen 613 aufweist und einer äußeren Bandage 614, welche aus einem hochfesten Kunststoff, beispielsweise aus einem glasfaserverstärkten Kunstharz besteht und zur Aufnahme der Fliehkraftbeanspruchungen dient. Die Innenlage 611 und der Spulenträger 612 bestehen aus einem isolierenden, schwingungsbeständigen Kunststoff, beispielsweise ebenfalls aus einem glasfaserverstärkten Kunstharz. Als Verdrehsicherung des rotierenden Teils 61 dienen Zylinderstifte 615, die in Bohrungen der Innenlage 611 und des Spulenträgers 612 sowie in dazu fluchtenden Sacklöchern der Welle 1 angeordnet und in radialer Richtung durch die Bandage 614 gehalten sind.

Der feststehende Teil 62 der zweiten induktiven Signalübertragungseinrichtung 6 besteht in radialer Richtung von innen nach außen gesehen aus einem Spulenträger 621, dessen Außenumfang Nuten zur Aufnahme von Spulen 622 aufweist und aus einer am Innenumfang des zweiten Tragzylinders 63 anliegenden Außenlage 623, wobei der Spulenträger 621 und die Außenlage 623 wiederum aus einem isolierenden, schwingungsbeständigen Kunststoff, beispielsweise aus einem glasfaserverstärkten Kunstharz bestehen. Zur Festlegung des feststehenden Teils 62 sind in Gewindebohrungen des zweiten Tragzylinders 63 eingeschraubte, radial ausgerichtete Senkschrauben 624 vorgesehen, deren Köpfe in entsprechenden Senkungen des Spulenträgers 621 liegen, damit sie nicht in den Luftspalt ε ragen.

Die Spulen 613 des rotierenden Teils 61 und die zugeordneten Spulen 622 des feststehenden Teils 62 sind jeweils in in sich geschlosssen umlaufenden Nuten verlegt, wobei diese Nuten teilweise in Umfangsrichtung und teilweise in axialer Richtung verlaufen. Die Spulen 613 und 622 sind dabei über den Umfang und in axialer Richtung systematisch so verteilt, daß in jeder Lage der Welle 1 eine gleichbleibende und ungestörte Signalübertragung möglich ist. Diese erfolgt mittels einer Spannungs-Frequenz-Umsetzung in einem Frequenzbereich von 10 bis 100 KHz.

Der Aufbau und die Festlegung des rotierenden Teils 51 und des feststehenden Teils 52 der ersten induktiven Signalübertragungseinrichtung 5 (vgl. Fig. 1 und 2) wird nicht gesondert dargestellt und beschrieben, da er dem in Fig. 3 dargestellten Aufbau der zweiten induktiven Signalübertragungseinrichtung 6 entspricht.

**Patentansprüche**

1. Anordnung für die kontakt- und berührungslose Übertragung von Meß- und Steuersignalen bei Generatoren mit einer rotierenden Gleichrichter- oder Thyristorerregung, mit zwei jeweils aus einem feststehenden Teil (52, 62) und einem rotierenden Teil (51, 61) bestehenden induktiven Signalübertragungseinrichtungen (5, 6), wobei der rotierende Teil (51) der ersten induktiven Signalübertragungseinrichtung (5) am Außenumfang eines mit der Welle (1) über eine Nabe (N) drehfest verbundenen Flanschringes (3) befestigt ist, dadurch gekennzeichnet, daß die zweite induktive Signalübertragungseinrichtung (6) im Axialbereich des auf Erdpotential liegenden Flanschringes (3 ; 3') konzentrisch innerhalb der ersten induktiven Signalübertragungseinrichtung (5) angeordnet ist und daß der rotierende Teil (61) der zweiten induktiven Signalübertragungseinrichtung (6) am Außenumfang der Welle (1 ; 1') befestigt ist.

2. Anordnung nach Anspruch 1, dadurch gekennzeichnet, daß der feststehende Teil (52) der ersten induktiven Signalübertragungseinrichtung (5) am Innenumfang eines im Maschinengehäuse gehaltenen ersten Tragzylinders (53) befestigt ist.

3. Anordnung nach Anspruch 2, dadurch gekennzeichnet, daß der feststehende Teil (62) der zweiten induktiven Signalübertragungseinrichtung (6) am Innenumfang eines konzentrisch in dem ersten Tragzylinder (53) gehaltenen zweiten Tragzylinders (63) befestigt ist.

4. Anordnung nach Anspruch 3, dadurch gekennzeichnet, daß der erste Tragzylinder (53) und der zweite Tragzylinder (63) über außerhalb des Axialbereichs des Ringflansches (3 ; 3') angeordnete Flanschen (531 bzw. 631) miteinander verbunden sind.

5. Anordnung nach Anspruch 3 oder 4, dadurch gekennzeichnet, daß der erste Tragzylinder (53) und der zweite Tragzylinder (63) auf Erdpotential liegen.

6. Anordnung nach einem der vorhergehenden Ansprüche, dadurch gekennzeichnet, daß die rotierenden Teile (51, 61) der ersten und der zweiten induktiven Signalübertragungseinrichtung (5, 6) jeweils aus einem auf den Flanschring (3 ; 3') bzw. auf die Welle (1 ; 1') aufbandagierten Spulenträger (612) bestehen, dessen Außenumfang Nuten zur Aufnahme von Spulen (613) aufweist.

7. Anordnung nach einem der vorhergehenden Ansprüche, dadurch gekennzeichnet, daß am Innenumfang des Flanschringes (3, 3') die Meß-, Steuer- und Versorgungselektronik der rotierenden Gleichrichter- oder Thyristorerregung enthaltende Baueinheiten (4) befestigt sind.

8. Anordnung nach Anspruch 7, dadurch gekennzeichnet, daß der Innenumfang des Flanschringes (3, 3') polygonal ausgebildet ist und daß an den ebenen Flächen des Polygons jeweils eine Baueinheit (4) befestigt ist.

9. Anordnung für die kontakt- und berührungslose Übertragung von Meß- und Steuersignalen bei Generatoren mit einer rotierenden Gleichrichtererregung nach einem der vorhergehenden Ansprüche, dadurch gekennzeichnet, daß die Nabe (N') auf der der rotierenden Gleichrichteranordnung gegenüberliegenden Seite einer Erregermaschine im Endbereich der Welle 1' derart angeordnet ist, daß sich der Flanschring 3' in axialer Richtung zum Ende der Welle 1' hin erstreckt.

10. Anordnung für die kontakt- und berührungslose Übertragung von Meß- und Steuersignalen bei Generatoren mit einer rotierenden Thyristorerregung nach einem der Ansprüche 1 bis 8, dadurch gekennzeichnet, daß der Flanschring (3) und ein an seinem Innenumfang die Leistungs-Bauteile der rotierenden Thyristorerregung aufnehmendes Thyristor-Rad (T) auf gegenüberliegenden Seiten ihrer gemeinsamen und auf Erdpotential liegenden Nabe (N) angeordnet sind.

**Claims**

1. An arrangement for the non-contacting and non-touching transmission of measuring and control signals in generators having a rotating rectifier or thyristor excitation unit, the arrangement including two inductive signal transmission devices (5, 6) which respectively comprise a stationary component (52, 62) and a rotating component (51, 61), where the rotating component (51) of the first inductive signal transmission device (5) is fixed to the outer periphery of a flange ring (3) which is connected to the shaft (1) by means of a hub (N) so as to be torsionally stiff, characterised in that the second inductive signal transmission device (6) is concentrically arranged within the first inductive signal transmission device (5) in the axial region of the flange ring (3 ; 3') where it is connected to earth potential, and in that the rotating component (61) of the second inductive signal transmission device (6) is secured to the outer periphery of the shaft (1 ; 1').

2. An arrangement as claimed in Claim 1, characterised in that the stationary component (52) of the first inductive signal transmission device (5) is secured to the inner periphery of a first supporting cylinder (53) which is held in the machine housing.

3. An arrangement as claimed in Claim 2, characterised in that the stationary component (62) of the second inductive signal transmission device (6) is secured to the inner periphery of a second supporting cylinder (63) which is concentrically held in the first supporting cylinder (53).

4. An arrangement as claimed in Claim 3, characterised in that the first supporting cylinder (53) and the second supporting cylinder (63) are connected to one another by means of flanges (531, 631) which are arranged outside the axial region of the ring flange (3 ; 3').

5. An arrangement as claimed in Claim 3 or 4, characterised in that the first supporting cylinder (53) and the second supporting cylinder (63) are connected to earth potential.

6. An arrangement as claimed in one of the preceding Claims, characterised in that the rotating components (51, 61) of the first and the second inductive signal transmission devices (5, 6) respectively consist of a coil carrier (612) which is bandaged onto the flange ring (3 ; 3') or onto the shaft (1 ; 1'), as the case may be, and whose outer periphery contains grooves for the accommodation of coils (613).

7. An arrangement as claimed in one of the preceding Claims, characterised in that components (4) comprising the measuring, control and supply electronics unit of the rotating rectifier or thyristor excitation unit are secured to the inner periphery of the flange ring (3, 3').

8. An arrangement as claimed in Claim 7, characterised in that the inner periphery of the flange ring (3, 3') is polygonal and that a component (4) is respectively secured to the plane surface of the polygon.

9. An arrangement for the non-contacting and non-touching transmission of measuring and control signals in generators with a rotating rectifier/excitation unit as claimed in one of the preceding Claims, characterised in that the hub (N) is arranged on the end region of the shaft 1' on that side of an excitation machine which is opposite to the rotating rectifier arrangement, and in such a manner that the flange ring 3' extends in the axial direction towards the end of the shaft 1'.

10. An arrangement for the non-contacting and non-touching transmission of measuring and control signals in generators with a rotating thyristor/excitation unit as claimed in one of Claims 1 to 8, characterised in that the flange ring (3) and a thyristor wheel (T), which on its inner periphery accommodates the power components of the rotating thyristor excitation unit, are arranged on opposite sides of their common hub (N) which is connected to earth potential.

## Revendications

1. Dispositif pour la transmission sans contact et sans attouchement de signaux de mesure et de commande sur des génératrices comportant une excitation à redresseur ou à thyristors tournante, comprenant deux dispositifs (5, 6) de transmission de signaux par induction, constitués chacune d'une partie fixe (52, 62) et d'une partie tournante (51, 61), la partie tournante (51) du premier dispositif (5) de transmission de signaux par induction étant fixée à la périphérie extérieure d'une bague à bride (3) solidarisée en rotation avec l'arbre (1) par l'intermédiaire d'un moyeu (N), caractérisé en ce que le deuxième dispositif (6) de transmission de signaux par induction est disposé concentriquement à l'intérieur du premier dispositif (5) de transmission de signaux par induction, dans la zone axiale de la bague à bride (3 ; 3') qui est au potentiel de la terre, et que la partie tournante (61) du deuxième dispositif (6) de transmission de signaux par induction est fixée à la périphérie extérieure de l'arbre (1 ; 1').

2. Dispositif selon la revendication 1, caractérisé en ce que la partie fixe (52) du premier dispositif (5) de transmission de signaux par induction est fixée à la périphérie intérieure d'un premier cylindre porteur (53) maintenu dans la carcasse de la machine.

3. Dispositif selon la revendication 2, caractérisé en ce que la partie fixe (62) du deuxième dispositif (6) de transmission de signaux par induction est fixée à la périphérie intérieure d'un deuxième cylindre porteur (63) maintenu concentriquement dans le premier cylindre porteur (53).

4. Dispositif selon la revendication 3, caractérisé en ce que le premier cylindre porteur (53) et le deuxième cylindre porteur (63) sont reliés l'un à l'autre par des brides (531 respectivement 631) disposées à l'extérieur de la zone axiale de la bague à bride (3, 3').

5. Dispositif selon la revendication 3 ou 4, caractérisé en ce que le premier cylindre porteur (53) et le deuxième cylindre porteur (63) sont au potentiel de la terre.

6. Dispositif selon une des revendications précédentes, caractérisé en ce que les parties tournantes (51, 61) du premier et du deuxième dispositif (5, 6) de transmission de signaux par induction sont formées chacune d'un porte-bobines (612) fixé par un bandage sur la bague à bride (3, 3') respectivement sur l'arbre (1 ; 1') et dont la périphérie extérieure présente des rainures pour la réception de bobines (613).

7. Dispositif selon une des revendications précédentes, caractérisé en ce que les unités (4) contenant l'électronique de mesure, de commande et d'alimentation de l'excitation à redresseur ou à thyristors tournante, sont fixées à la périphérie intérieure de la bague à bride (3, 3').

8. Dispositif selon la revendication 7, caractérisé en ce que la périphérie intérieure de la bague à bride (3, 3') est polygonale et qu'une unité (4) est fixée sur chacune des faces planes du polygone.

9. Dispositif pour la transmission sans contact et sans attouchement de signaux de mesure et de commande sur des génératrices possédant une excitation à redresseur tournante, selon une des revendications précédentes, caractérisé en ce que le moyeu (N') est disposé, sur le côté opposé au dispositif redresseur tournant d'une machine excitatrice, dans la région terminale de l'arbre (1'), de manière que la bague à bride (3') s'étende en direction axiale vers l'extrémité de l'arbre (1').

10. Dispositif pour la transmission sans contact et sans attouchement de signaux de mesure et de commande sur des génératrices possédant une excitation à thyristors tournante, selon une des revendications 1 à 8, caractérisé en ce que la bague à bride (3) et une roue à thyristors (T), recevant sur sa périphérie intérieure les composants de puissance de l'excitation à thyristors tournante, sont disposés sur des côtés opposés de leur moyeu (N) commun et se trouvant au potentiel de la terre.

FIG 1

FIG 3

FIG 2